# EUROPÄISCHE PATENTSCHRIFT

(11) **EP 1 933 022 B1**
(45) Veröffentlichungstag und Bekanntmachung des Hinweises auf die Patenterteilung: **26.09.2018**
(21) Anmeldenummer: 07019989.8
(22) Anmeldetag: 12.10.2007
(51) Int. Cl.: F02F 3/10

(54) **Kolben für eine Brennkraftmaschine**
Piston for a combustion engine
Piston pour moteur à combustion interne

(30) Priorität: 06.12.2006 DE 102006058871
(43) Veröffentlichungstag der Anmeldung: 18.06.2008
(73) Patentinhaber: KS KOLBENSCHMIDT GmbH, 74172 Neckarsulm (DE)
(72) Erfinder: Bürkle, Gunter, Dr., 71726 Benningen (DE)
(74) Vertreter: DREISS Patentanwälte PartG mbB

(56) Entgegenhaltungen:
- EP-A- 1 433 838
- DE-A1-102005 057 754
- US-A- 5 884 600
- US-B1- 6 684 844

## Beschreibung

Die Erfindung betrifft einen Kolben für eine Brennkraftmaschine, insbesondere aus Aluminiumlegierung.

Es ist bereits bekannt, Kolben mit einer reibungsvermindernden Beschichtung zu versehen. Ein Kolben mit den Merkmalen des Oberbegriffs des Anspruchs 1 ist in der nicht vorveröffentlichten Patentanmeldung DE 10 2005 026 664.9 der Anmelderin beschrieben und in US 5,884,600.

DE 38 01 784 A1 beschreibt einen Kolben mit einer Verschleißschutzschicht im Bereich der Ringnutenflanken. Die Verschleißschutzschicht umfasst eine Kunststoffbasis mit

Feststoffteilchen bestehend aus Graphit und Molybdändisulfid in einer Partikelgröße von 0,1 bis 40 µm.

DE 103 28 120 A1 befasst sich mit einer Gleitkomponente mit einer Überzugsschicht auf der Basis von Polyamidimid, wie z.B. eine Taumelscheibe und einen Kolben in einem Kompressor für ein Klimaanlagensystem. Die Überzugsschicht kann unter anderem Partikel wie Molybdändisulfid, Graphit und Zinksulfid enthalten.

DE 699 08 837 T2 beschreibt einen Kolben mit einer hartanodisierten Beschichtung und einer darauf aufgebrachten Lackschicht auf Basis von Polyimid, Polyamidimid, Polyphenylensulfid oder Polyarylsulfon. Die Lackschicht weist schmierende Teilchen in Form von Graphit, Kohlenstoffmonofluorid, Bornitrid und Sulfide, Selenide und Telluride von Molybdän, Wolfram und Titan auf. Eine Ausführungsform umfasst 5 - 30 Vol.-% Graphit in Polyamidimid. Eine weitere Ausführungsform umfasst 2 - 20 Vol.-% Graphitteilchen, 2 - 20 Vol.-% Molybdändisulfid in Polyamidimid.

EP 1 469 050 A1 beschäftigt sich mit einer Beschichtung für eine Gleitfläche. Die Beschichtung beruht vorzugsweise auf Basis von Polyamidimid (PAI), wobei vorzugsweise als Festschmierstoff PTFE enthalten ist. Des Weiteren erwähnt ist Molybdändisulfid oder Graphit. Des weiteren können Partikel wie Titanoxid, Siliziumcarbid, Siliziumoxid in einer Partikelgröße von 0,3 µm enthalten sein.

Aus DE 4343439 C2 ist ein Kolben bekannt, der einen reliefartig ausgebildeten Kolbenmantel mit reliefartig zurückgesetzten Bereichen aufweist, die durch Stege oder Streifen begrenzt sind, welche zur gleitenden Anlage an die Zylinderbohrung dienen. Diese Stege oder Streifen tragen eine Beschichtung einer Stärke von 10 - 35 µm auf Polymerbasis, wobei hierfür Thermoplaste aber auch Epoxydharze und Polyimide sowie Polyamidimide genannt sind. Als Festschmierstoff wird Graphit, Molybdändisulfid und Bornitrid genannt, wobei Graphit und Molybdändisulfid zu 25 - 58 Gew.% und Bornitrid zu 7 - 16 Gew.% enthalten sind.

JP 05/001620 A offenbart einen Kolben mit einer eher dicken thermoplastischen Beschichtung aus Polyethernitryl mit 30 Gew.% Kohlenstofffasern. Diese Beschichtung wird als separates Teil hergestellt und dann beispielsweise mittels Kleber mit dem Kolbenschaft verbunden. Neben Polyethernitryl sind weniger vorteilhafte Thermoplaste in Form von PEEK, PES und PI erwähnt.

US 6,684,844 B1 offenbart einen Kolben mit einer 10 - 16 µm dicken Beschichtung auf Basis von Polyamid und 5 - 30 Vol.% Graphit-Partikel oder mit 2 - 20 Vol.% Graphit-Partikel und 2 - 20 Vol% Molybdändisulfid. Graphit und Molybdändisulfid kann auch in Form kurzer Fasern vorliegen.

EP 1 469 050 A1 offenbart eine auch für eine Kolbenschaftbeschichtung geeignete Lackzusammensetzung auf PAI-Basis mit PTFE als Festschmierstoff und mit TiO₂ als Hartstoffphase und mit Silan-Kopplungsmittel.

Der vorliegenden Erfindung liegt die Aufgabe zugrunde, insbesondere das Einlauf- und das Notlaufverhalten zu verbessern, wobei gerade der Bereich der Mischreibung, wo die Verhältnisse regelmäßig kritisch sind, verbessert werden soll.

Unter Mischreibung versteht man einen Zustand, wie er sich beim Anfahren oder im Betrieb (zeitweise) einstellen kann, wenn nämlich die Gleitpartner, also Kolben und Zylinderfläche, nicht durch einen durchgängigen Schmierfilm (hydrodynamischer Zustand) voneinander getrennt sind. Hier kommt es in besonderem Maße zu Verschleiß, welcher die Lebensdauer des tribologischen Systems aus Kolben und Zylinderwandung, reduziert. Gerade bei dünnen Einlauf- oder Notlaufschichten stellt sich aber auch das Problem der Anbindung der dünnen Oberflächenbeschichtung an den Untergrund, was für das Funktionieren des Kolbens aber von essentieller Bedeutung ist.

Diese Aufgabe wird durch einen Kolben mit den Merkmalen des Anspruchs 1 gelöst. Es wurde festgestellt, dass durch eine Erhöhung des Anteils tragender Substanzen in Form von Kohlenstofffasern oder Aramidfasern, eine erhebliche Verbesserung im kritischen Mischreibungsbereich erreicht werden kann. Dies wird darauf zurückgeführt, dass Reibungswärme besser abgeführt werden kann, so dass eine Überhitzung dort, wo Wärme entsteht, besser verhindert werden kann. Insbesondere die Belastbarkeit der Beschichtung wird durch einen hohen Faseranteil verbessert, da Fasern das dreidimensionale Gebilde der Lackschicht stabilisieren. Aufgrund ihrer amorphen Struktur bilden Kohlenstofffasern eine harte Verstärkung. Voraussetzung hierfür ist jedoch, dass dieses Gebilde noch einen hinreichenden polymeren Bindemittelanteil von vorzugsweise 20-35 Gew.-% aufweist. Insofern erweist es sich als vorteilhaft, dass der Faseranteil 16 - 50 Gew.-%, insbesondere 20 - 50 Gew.-%, insbesondere 30 - 50 Gew.-% beträgt.

Es wurde erfindungsgemäß festgestellt, dass das an sich im Hinblick auf seine tribologischen Eigenschaften bewährte PTFE bei Lackschichten auf Basis von Polyamidimid (PAI) gerade bei dünnen Beschichtungen die Anbindung an den Untergrund erschwert bzw. dass sich eine PTFE-freie Lackschicht, auch wenn sie sehr dünn ist, erheblich besser auf einem metallischen Untergrund, insbesondere aus Aluminiumlegierung halten lässt.

Außerdem hat sich ein Zusatz von Zinksulfid als weiterem Festschmierstoff und Titandioxid als Hartstoffphase jeweils im beanspruchten Bereich als hervorragend geeignet erwiesen. Bei Zinksulfid handelt es sich um einen guten Festschmierstoff, der unempfindlich gegen Trockenheit ist. Das diesbezüglich empfindlichere Graphit hat hingegen eine gute Wärmeleitfähigkeit und ist in der Lage, die auftretende Reibungswärme in Richtung auf den Untergrund abzuleiten. Titandioxid hingegen verleiht die erforderliche Verschleißbeständigkeit. Somit ist mit diesen Komponenten ein tribologisch gesehen auch bei Bedingungen der Mischreibung (hohe Last, auftretende Reibungswärme, Trockenheit) geeignetes System geschaffen.

Es hat sich als vorteilhaft erwiesen, wenn Zinksulfid, Graphit und TiO₂ jeweils zu 7 bis 13 Gew.-% vorliegen. Es erweist sich auch als zweckmäßig, wenn das gewichtsprozentuale Verhältnis von Zinksulfid und von Graphit jeweils zu TiO₂ zwischen 0,6 und 1,4, insbesondere zwischen 0,7 und 1,3 beträgt. Im bevorzugten Fall wird vorgeschlagen, etwa dieselben gewichtsprozentualen Mengen von Zinksulfid, Graphit und TiO₂ in der Lackschicht vorzusehen.

Es erweist sich im Hinblick auf eine gute Anbindung an den Untergrund, also an den Kolbenmantel, als vorteilhaft, wenn die Lackschicht fluorpolymerfrei ist.

Es erweist sich des Weiteren als vorteilhaft, dass PAI gut lösbar ist, beispielsweise in NMP (Verhältnis etwa 1:1), und so die Lackschicht als Lösung aufgebracht werden kann.

Zinksulfid und Titandioxid liegen vorzugsweise als sehr feine Teilchen vor, da sich hierdurch eine sehr "dichte" homogene Verteilung dieser Stoffe in der Polymermatrix erreichen lässt. Sie haben vorzugsweise einen D50-Wert der Partikelgröße zwischen 200 nm und 500 nm. Der vorerwähnte D50-Wert der Teilchengröße bezeichnet eine Teilchengröße, bezüglich der 50 Gew.-% des betreffenden Stoffs mit einer demgegenüber größeren Teilchengröße und 50 Gew.-% mit einer demgegenüber kleineren Teilchengröße vorliegen.

Die vorliegende Erfindung schließt zwar nicht aus, dass neben PAI oder Epoxy als matrixbildender Kunststoffkomponente der Lackschicht noch ein oder mehrere weitere matrixbildende Kunststoffe enthalten sein dürfen. Ihr Anteil sollte aber nicht mehr als 20 Gew.-%, insbesondere nicht mehr als 10 Gew.-% des Anteils von PAI in der Lackschicht betragen. Vorzugsweise ist die Matrix zu 100 % von PAI oder Epoxy, vorzugsweise von PAI gebildet. Die matrixbildende Kunststoffkomponente sollte etwa 20 - 35 Gew.-% der Lackschicht ausmachen, damit die Füllstoffe darin gut eingebunden und gehalten werden.

Vorteilhafterweise besteht die Lackschicht aus einem polymeren Bindemittel, vorzugsweise PAI, und aus Zinksulfid und Graphit als Festschmierstoffe sowie aus Titandioxid als Hartstoffphase und aus Kohlenstofffasern oder Aramidfasern als tragender Komponente der Lackbeschichtung, vorzugsweise mit den in den Ansprüchen angegebenen Anteilen.

Ausgehend von einer Lackschichtzusammensetzung mit ca.7 Gew.-% Kohlenstofffasern und mit Festschmierstoffen in Form von Graphit, Zinksulfid und Titandioxid (TiO₂) in etwa gleichen gewichtsprozentualen Anteilen und ca. 25 Gew.-% Polymeranteil (PAI) als Rest wurde in einem Ring/Platte-Verschleißtest die Verschleißrate bei ansteigenden Kohlenstofffaseranteilen untersucht. Die Erhöhung des Kohlenstofffaseranteils wurde unter Beibehaltung des Polymeranteils von ca. 25 Gew.-% realisiert, indem Kohlenstofffasern und entsprechend Polymer zugegeben wurden, so dass sich die gewichtsprozentuale Zusammensetzung der übrigen Festschmierstoffe Graphit, Zinksulfid und Titandioxid entsprechend erniedrigte. Es zeigte sich die aus nachfolgendem Schaubild ersichtliche Herabsetzung der Verschleißrate.

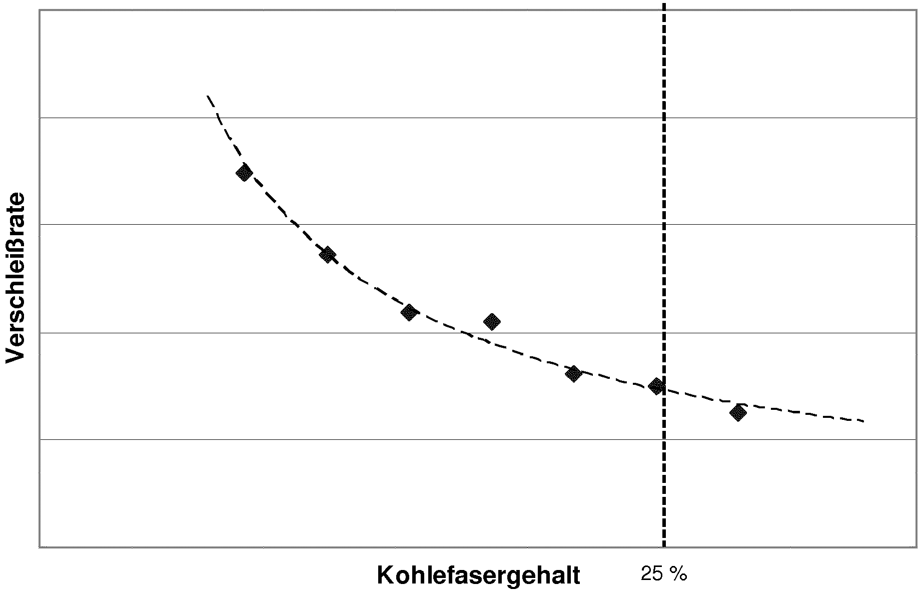

Als besonders vorteilhaft wird daher eine Zusammensetzung der PTFE-freien Lackschicht angesehen mit 20 - 30 Gew.-% Kohlenstofffasern, 12 - 18 Gew.-% Graphit, 12 - 18 Gew.-% Zinksulfid und 12 - 18 Gew.-% TiO₂ und 20 - 30 Gew.-% Polymerbasis als Rest.

Des Weiteren hat sich eine Zusammensetzung der Lackschicht als vorteilhaft erwiesen, mit 40 - 50 Gew.-% Kohlenstofffasern, 20 - 25 Gew.-% Graphit und 25 - 35 Gew.-% Polymerbasis als Rest.

Allein das Zusammenwirken von Kohlenstofffasern in einem verhältnismäßig hohen gewichtsprozentualen Anteil von wenigstens 16 Gew.-%, insbesondere wenigstens 20 Gew.-%, weiter insbesondere 30 bis 50 Gew.-%, mit Graphit als Festschmierstoff und 25 bis 35 Gew.-% Polymer als Bindemittel führt zu vorteilhaften Reibwerten und damit geringeren Verschleißraten als bei demgegenüber geringen Kohlenstofffaseranteilen. Die Zugabe von Zinksulfid und Titandioxid als weitere Festschmierstoffe unter Herabsetzung des Graphitanteils auf 12 bis 18 Gew.-% und des Kohlenstofffaseranteils auf 20 bis 30 Gew.-% führt zu einer weiteren Optimierung der Kolbenbeschichtung bzw. des Kolbens.

## Patentansprüche

1. Kolben für eine Brennkraftmaschine, insbesondere aus Aluminiumlegierung, wobei auf dem Kolbenmantel zumindest bereichsweise eine 5 - 25 µm dicke PTFE-freie Lackschicht auf Polymerbasis mit 5 - 25 Gew.-% Graphit oder MoS₂ als Festschmierstoff aufgebracht ist, wobei die Polymerbasis der Lackschicht von Polyamidimid (PAI) oder Epoxyharz gebildet ist, **dadurch gekennzeichnet, dass** die Lackschicht 5 - 25 Gew.-% Graphit oder MoS₂ und zusätzlich einen Faseranteil von 16 - 50 Gew.-% in Form von Kohlenstofffasern mit amorpher Struktur oder Aramidfasern aufweist, dass die Kohlenstofffasern und Aramidfasern einen Durchmesser von 5,5 µm bis 10 µm und eine Länge von 50 - 150 µm aufweisen.

2. Kolben nach Anspruch 1, **dadurch gekennzeichnet, dass** der Faseranteil 20 - 50 Gew.-%, insbesondere 30 - 50 Gew.-% beträgt.

3. Kolben nach Anspruch 1 oder 2, **dadurch gekennzeichnet, dass** der Festschmierstoff 5 - 25 Gew.-%, insbesondere 5 - 15 Gew.-% Zinksulfid umfasst.

4. Kolben nach Anspruch 1, 2 oder 3, **dadurch gekennzeichnet, dass** die Lackschicht 5 - 25 Gew.-%, insbesondere 5 - 15 Gew.-% TiO₂ umfasst.

5. Kolben nach Anspruch 3 oder 4, **dadurch gekennzeichnet, dass** Zinksulfid und/oder TiO₂ in einer Partikelgröße von ≤ 0,7 µm vorliegen.

6. Kolben nach einem oder mehreren der vorstehenden Ansprüche, **dadurch gekennzeichnet, dass** die Lackschicht eine Dicke von 8 - 20 µm aufweist.

7. Kolben nach einem oder mehreren der vorstehenden Ansprüche, **dadurch gekennzeichnet, dass** das gewichtsprozentuale Verhältnis von Zinksulfid und von Graphit/MoS₂ jeweils zu TiO₂ 0,6 - 1,4, insbesondere 0,7 - 1,3 beträgt.

8. Kolben einem der vorstehenden Ansprüche, **dadurch gekennzeichnet, dass** die Lackschicht fluorpolymerfrei ist.

9. Kolben nach einem der vorstehenden Ansprüche, **dadurch gekennzeichnet, dass** die Lackschicht als Lösung mit gelöstem PAI aufgebracht ist.

10. Kolben nach einem der vorstehenden Ansprüche, **dadurch gekennzeichnet, dass** Zinksulfid und TiO₂ in einer Partikelgröße von ≤ 0,6 µm, insbesondere ≤ 0,5 µm vorliegen.

11. Kolben nach einem der vorstehenden Ansprüche, **dadurch gekennzeichnet, dass** der D50-Wert der Partikelgröße von Zinksulfid und TiO₂ zwischen 200 nm und 500 nm liegt.

12. Kolben nach einem der vorstehenden Ansprüche, **gekennzeichnet durch** 40 - 50 Gew.-% Kohlenstofffasern, 20 - 25 Gew.-% Graphit und 25 - 35 Gew.-% Polymerbasis als Rest.

13. Kolben nach einem der vorstehenden Ansprüche, **gekennzeichnet durch** 20 - 30 Gew.-% Kohlenstofffasern, 12 - 18 Gew.-% Graphit, 12 - 18 Gew.-% Zinksulfid und 12 - 18 Gew.-% TiO₂ und 20 - 30 Gew.-% Polymerbasis als Rest.

## Claims

1. A piston for an internal combustion engine, in particular made of aluminium alloy, wherein a PTFE-free paint layer 5 - 25 µm thick on a polymer basis with 5 - 25% by weight graphite or MoS₂ as solid lubricant is applied on the piston skirt at least in regions, wherein the polymer basis of the paint layer is formed by polyamide imide (PAI) or epoxy resin, **characterised in that** the paint layer has 5 - 25% by weight graphite or MoS₂ and additionally a fibre content of 16 - 50% by weight in the form of carbon fibres of amorphous structure or aramid fibres, **in that** the carbon fibres and aramid fibres have a diameter of 5.5 µm to 10 µm and a length of 50 - 150 µm.

2. A piston according to Claim 1, **characterised in that** the fibre content is 20 - 50% by weight, in particular 30 - 50% by weight.

3. A piston according to Claim 1 or 2, **characterised in that** the solid lubricant comprises 5 - 25% by weight, in particular 5 - 15% by weight, zinc sulphide.

4. A piston according to Claim 1, 2 or 3, **characterised in that** the paint layer comprises 5 - 25% by weight, in particular 5 - 15% by weight, TiO₂.

5. A piston according to Claim 3 or 4, **characterised in that** zinc sulphide and/or TiO₂ are present in a particle size of ≤ 0.7 µm.

6. A piston according to one or more of the preceding claims, **characterised in that** the paint layer has a thickness of 8 - 20 µm.

7. A piston according to one or more of the preceding claims, **characterised in that** the percent by weight ratio of zinc sulphide and of graphite/MoS₂ in each case to TiO₂ is 0.6 - 1.4, in particular 0.7 - 1.3.

8. A piston [according to] one of the preceding claims, **characterised in that** the paint layer is free from fluoropolymer.

9. A piston according to one of the preceding claims, **characterised in that** the paint layer is applied as a solution with dissolved PAI.

10. A piston according to one of the preceding claims, **characterised in that** zinc sulphide and TiO₂ are present in a particle size of ≤ 0.6 µm, in particular ≤ 0.5 µm.

11. A piston according to one of the preceding claims, **characterised in that** the D50 value of the particle size of zinc sulphide and TiO₂ lies between 200 nm and 500 nm.

12. A piston according to one of the preceding claims, **characterised by** 40 - 50% by weight carbon fibres, 20 - 25% by weight graphite and 25 - 35% by weight polymer base as remainder.

13. A piston according to one of the preceding claims, **characterised by** 20 - 30% by weight carbon fibres, 12 - 18% by weight graphite, 12 - 18% by weight zinc sulphide and 12 - 18% by weight TiO₂ and 20 - 30% by weight polymer base as remainder.

## Revendications

1. Piston pour un moteur à combustion interne, en particulier en alliage d'aluminium, dans lequel sur la jupe du piston, au moins par endroits, est appliquée une couche de revêtement sans PTFE d'une épaisseur 5 à 25 µm à base de polymère ayant 5 à 25 % en poids de graphite ou de MoS₂, en tant que lubrifiant sec, dans lequel la base de polymère de la couche de revêtement est formée de polyamideimide (PAI) ou de résine époxy, **caractérisé en ce que** la couche de revêtement comprend 5 à 25 % en poids de graphite ou de MoS₂, et en plus une teneur en fibres de 16 à 50 % en poids sous la forme de fibres de carbone ayant une structure amorphe ou de fibres d'aramide, et **en ce que** les fibres de carbone et les fibres d'aramide ont un diamètre de 5,5 µm à 10 µm et une longueur de 50 à 150 µm.

2. Piston selon la revendication 1, **caractérisé en ce que** la teneur en fibres est de 20 à 50 % en poids, en particulier de 30 à 50 % en poids.

3. Piston selon la revendication 1 ou 2, **caractérisé en ce que** le lubrifiant sec comprend de 5 à 25 % en poids, en particulier de 5 à 15 % en poids de sulfure de zinc.

4. Piston selon la revendication 1, 2 ou 3, **caractérisé en ce que** la couche de revêtement contient de 5 à 25 % en poids, en particulier de 5 à 15 % en poids de TiO₂.

5. Piston selon la revendication 3 ou 4, **caractérisé en ce que** le sulfure de zinc et/ou le TiO₂ sont présents à une taille de particules ≤ 0,7 µm.

6. Piston selon une ou plusieurs des revendications précédentes, **caractérisé en ce que** la couche de revêtement a une épaisseur de 8 à 20 µm.

7. Piston selon une ou plusieurs des revendications précédentes, **caractérisé en ce que** le rapport de pourcentage en poids du sulfure de zinc et du graphite/MoS₂, respectivement, par rapport au TiO₂ est de 0,6 à 1,4, en particulier de 0,7 à 1,3.

8. Piston selon l'une des revendications précédentes, **caractérisé en ce que** la couche de revêtement est sans fluoropolymère.

9. Piston selon l'une des revendications précédentes, **caractérisé en ce que** la couche de revêtement est appliquée en solution avec du PAI dissous.

10. Piston selon l'une des revendications précédentes, **caractérisé en ce que** le sulfure de zinc et le TiO₂ sont présents à une taille de particules ≤ 0,6 µm, en particulier ≤ 0,5 µm.

11. Piston selon l'une des revendications précédentes, **caractérisé en ce que** la valeur D50 de la taille de particules du sulfure de zinc et du TiO₂ est comprise entre 200 nm et 500 nm.

12. Piston selon l'une des revendications précédentes, **caractérisé par** 40 à 50 % en poids de fibres de carbone, 20 à 25 % en poids de graphite et 25 à 35 % en poids de base de polymère pour le reste.

13. Piston selon l'une des revendications précédentes, **caractérisé par** 20 à 30 % en poids de fibres de carbone, 12 à 18 % en poids de graphite, 12 à 18 % en poids de sulfure de zinc, et 12 à 18 % en poids de TiO₂, et de 20 à 30 % en poids de base de polymère pour le reste.
